# EUROPÄISCHE PATENTANMELDUNG

(11) **EP 0 994 444 A2**
(43) Veröffentlichungstag der Anmeldung: **19.04.2000**
(21) Anmeldenummer: 99440275.8
(22) Anmeldetag: 15.10.1999
(51) Int. Cl.: G07C 9/00, G07C 5/08

(54) **Verfahren zur Betriebsfreigabe eines Kfz sowie Chipkarte und Fahrzeugeinrichtung hierfür**

(30) Priorität: 17.10.1998 DE 19848001
(71) Anmelder: ALCATEL, 75008 Paris (FR)
(72) Erfinder: Weik, Hartmut, 70195 Stuttgart (DE)
(74) Vertreter: Brose, Gerhard, Dipl.-Ing.

(57) **Zusammenfassung**

Ein Verfahren zur Betriebsfreigabe einer KFZ aufgrund der Zuführung eines Datenträgers in eine KFZ-seitige Leseeinrichtung ist dadurch gekennzeichnet, daß der Datenträger benutzerspezifische Information des Inhabers gespeichert hat, welche von der Leseeinrichtung detektiert, einer KFZ-seitigen Recheneinheit zugeführt und mit dort gespeicherten Information verglichen wird, daß vom Benutzer weitere, personenbezogene Informationen von einer KFZ-seitigen Erkennungseinrichtung abgefragt, der Recheneinheit zugeführt und mit KFZ-seitig gespeicherter, auf die Person des oder der zulässigen Benutzer bezogener Information verglichen wird, und daß abhängig vom Ergebnis des personenbezogenen Datenvergleichs die Betriebsfreigabe des KFZ erfolgt. Damit läßt sich eine unberechtigte Benutzung des KFZ, selbst bei Besitz der "richtigen" Chipkarte praktisch ausschließen.

## Beschreibung

Die Erfindung betrifft ein Verfahren zur Betriebsfreigabe eines Kraftfahrzeuges (= KFZ), beispielsweise durch Freigabe des Zündsystems und/oder der Kraftstoffzufuhr und/oder Sperrung eines Alarmsystems des KFZ, wobei die Betriebsfreigabe aufgrund der Zuführung eines Datenträgers, insbesondere einer Chipkarte in eine KFZ-seitige Leseeinrichtung erfolgt, wenn die Leseeinrichtung erkennt, daß der zugeführte Datenträger gültig ist und zur Freigabe berechtigende Daten gespeichert hat, sowie einen geeigneten Datenträger und entsprechende Fahrzeugeinrichtungen hierfür.

Ein derartiges Verfahren ist bekannt aus der SE 93 00 329 A.

Zur Sicherung von Kraftfahrzeugen gegen unbefugte Benutzung, insbesondere gegen Diebstahl, ist auf dem Markt eine Vielzahl von technischen Einrichtungen erhältlich. Neben den schon seit Beginn des Automobilbaus eingesetzten verschließbaren Fahrzeugtüren ist seit vielen Jahrzehnten ein Zündschloß vorgesehen, welches in der Regel mittels eines Zündschlüssels entriegelbar ist, der meistens gleichzeitig auch zur Öffnung der Fahrzeugtüren dient.

Da derartige mechanische Schlösser von technisch versierten Dieben leicht "geknackt" werden können, werden zur Erhöhung der Diebstahlsicherheit seit einigen Jahren auch Magnetkarten mit eingebauten elektronischen Chips eingesetzt, die von einem fahrzeug-seitigen Leser erkannt werden können und bei entsprechender Berechtigung eine Freigabe des Zündsystems und/oder der Kraftstoffzufuhr, sowie ein Ausschalten möglicher Alarmsysteme im Kraftfahrzeug bewirken. Ein derartiges Schließsystem für Kraftfahrzeuge ist beispielsweise in der eingangs zitierten SE 93 00 329 A beschrieben.

In der DE 44 09 166 C1 ist eine andere Art von Zugangskontrollvorrichtung für ein Fahrzeug beschrieben, bei der zwar ebenfalls eine tragbare Chipkarte verwendet wird, in deren Speichereinheit personen- und/oder fahrzeugspezifische Daten in verschlüsselter Form gespeichert sind. Jedoch wird hiermit nicht die Betriebsfreigabe für das Fahrzeug selbst bewirkt, sondern eine Zugangsberechtigung des mit der Chipkarte versehenen Fahrzeugs über eine externe stationäre Steuereinheit am Wegrand und über ein Fahrzeugsteuergerät im Fahrzeug selbst abgefragt. Die Signale zu und von der stationären Steuereinheit können über eine große Reichweite und die Signale zwischen dem Fahrzeugsteuergerät und der Chipkarte mit einer geringen Reichweite übertragen werden. Bei der bekannten Zugangskontrollvorrichtung kann die Chipkarte auch einen Guthabenspeicher aufweisen, von dem ein zu zahlender Betrag abgebucht wird, wenn der Zugang zu dem zunächst versperrten Bereich kostenpflichtig ist.

Ein wesentlicher Mangel bei diesen bekannten Lösungen liegt darin, daß ein nicht berechtigter Fahrzeugbenutzer, insbesondere auch ein Fahrzeugdieb, wenn er nur im Besitz der Chipkarte ist, das Fahrzeug ohne weiteres in Gang setzen und wegfahren kann.

Aufgabe der vorliegenden Erfindung ist es demgegenüber, ein Verfahren der eingangs beschriebenen Art sowie einen dafür geeigneten Datenträger und eine entsprechende Fahrzeugeinrichtung vorzustellen, die eine unberechtigte Benutzung des Kraftfahrzeugs, selbst bei Besitz der "richtigen" Chipkarte praktisch ausschließen.

Erfindungsgemäß wird diese Aufgabe dadurch gelöst, daß der Datenträger benutzerspezifische Information des Inhabers des Datenträgers gespeichert hat, welche von der Leseeinrichtung detektiert, einer KFZ-seitigen Recheneinheit zugeführt und dort mit KFZ-seitig gespeicherter Information verglichen wird, daß abhängig vom Ergebnis des Vergleichs vom Benutzer weitere, personenbezogene Informationen von einer KFZ-seitigen Erkennungseinrichtung abgefragt, der KFZ-seitigen Recheneinheit zugeführt und mit KFZ-seitig gespeicherter, auf die Person des oder der zulässigen Benutzer bezogener Information verglichen wird, und daß abhängig vom Ergebnis des personenbezogenen Datenvergleichs die Betriebsfreigabe des KFZ erfolgt oder nicht.

Auf diese Weise wird sichergestellt, daß nicht nur der bloße (möglicherweise unberechtigte) Besitz des Datenträgers bereits die Betriebsfreigabe ermöglicht, sondern erst die Eingabe einer weiteren, personenbezogenen Information, über die ein Nicht-Berechtigter in der Regel nicht verfügen kann. Zusätzlich sind auf dem Datenträger aber auch bereits benutzerspezifische Informationen des berechtigten Inhabers enthalten, die für einen potentiellen Fahrzeugdieb nur sehr schwer erhältlich oder nachzuahmen wären. Die Betriebsfreigabe kann also nur dann erfolgen, wenn sowohl der benutzerspezifisch individualisierte Datenträger vom KFZ-seitigen System akzeptiert wird, als auch eine personenbezogene Erkennung des Benutzers aufgrund weiterer, dem KFZ-seitigen System zugeführter Information stattgefunden hat. Selbst wenn ein potentieller Fahrzeugdieb sich in dem Besitz eines Datenträgers gebracht hat, der seiner Art nach von dem Fahrzeugsystem akzeptiert würde, so müßte der Datenträger aufgrund des Erfordernisses der benutzerspezifischen Information von einem Berechtigten gestohlen worden sein. Dieses alleine würde dem potentiellen Dieb aber auch noch nicht weiterhelfen, da er ja nicht über die weitere, personenbezogene Information verfügt, die zusätzlich von der Erkennungseinrichtung abgefragt wird.

Bei einer besonders einfachen Verfahrensvariante wird die personenbezogene Information der Erkennungseinrichtung in Form eines alphanumerischen Codes, insbesondere einer in der Regel nur den berechtigten Benutzern bekannten Geheimnummer (personal identification number = "PIN") eingegeben, wie dies beispielsweise an sich zum Schutz von Kreditkarten bei der Betätigung von Bankautomaten bekannt ist. Als KFZ-seitige Erkennungseinrichtung ist hierfür lediglich eine alphanumerische Eingabetastatur erforderlich.

Bei einer weiteren Verfahrensvariante wird die personenbezogene Information in Form eines elektronischen Fingerabdrucks des Benutzers der Erkennungseinrichtung zugeführt, was im Zusammenhang mit dem Zugang zu Gebäuden an sich bereits bekannt ist.

Eine weitere Möglichkeit der zusätzlichen Sicherung ist die Zuführung personenbezogener Informationen an die Erkennungseinrichtung mittels akustischer Signale. Diese können entweder vom Benutzer selbst durch Einsatz seiner Stimme oder aber auch mittels eines tonerzeugenden Gerätes abgegeben werden.

Bei einer bevorzugten Weiterbildung dieser Verfahrensvariante enthalten die akustischen Signale ein Codewort, welches von einer KFZ-seitigen Spracherkennungseinrichtung erkannt und mit einem abgespeicherten, zur Betriebsfreigabe berechtigenden Codewort verglichen wird. Der Vorteil dieser Weiterbildung liegt darin, daß das Codewort nicht über eine Tastatur eingegeben werden muß, sondern vom Benutzer einfach gesprochen wird.

Besonders bevorzugt ist eine Weiterbildung der obigen Verfahrensvariante, bei der die akustischen Signale vom Benutzer abgegebene Stimmsignale umfassen und in einer KFZ-seitigen Sprechererkennungseinrichtung mit abgespeicherten, zur Betriebsfreigabe berechtigenden Frequenzmustern der Stimmen bestimmter Benutzer verglichen werden. Aus der Kriminalistik ist bekannt, daß die Frequenzmuster menschlicher Stimmsignale derartig ausgeprägt individualisiert sind, daß sie zur Identifikation einer Person grundsätzlich sogar besser geeignet sind, als die "klassische" Abnahme von Fingerabdrücken.

Bei einer weiteren vorteilhaften Verfahrensvariante wird die personenbezogene Information der Erkennungseinrichtung in Form von optischen Signalen zugeführt. Wie die oben beschriebenen akkustischen Signale können die optischen Signale ebenfalls wiederum vom Benutzer direkt oder unter Zuhilfenahme einer Zusatzeinrichtung (Lampe etc.) abgegeben werden, wobei die Erkennungseinrichtung einen optischen Detektor umfassen muß.

Vorteilhaft ist eine Weiterbildung dieser Verfahrensvariante, bei der die optischen Signale Licht einer bestimmten Frequenz und/oder Impulsfolge umfassen und KFZ-seitig mit abgespeicherten, zur Betriebsfreigabe berechtigenden Frequenzen und/oder Impulsfolgen verglichen werden. Derartige individualisierte Frequenzen und/oder Impulsfolgen lassen sich ohne weiteres in bekannte Leuchtmittel wie Mini-Laser implementieren.

Besonders bevorzugt ist eine Weiterbildung der oben beschriebenen Verfahrensvariante, bei der die optischen Signale Bildmuster umfassen und in einer KFZ-seitigen Bilderkennungseinrichtung mit abgespeicherten, zur Betriebsfreigabe berechtigenden Bildmustern verglichen werden. Derartige Bildmuster können wiederum hochgradig individualisierend und damit benutzerspezifisch sein.

Bei einfachen Weiterbildungen der obigen Verfahrensvariante können die Bildmuster beispielsweise auf einer Erkennungsmarke, die der berechtigte Benutzer mit sich führt, aufgetragen sein.

Besonders bevorzugt ist aber eine Weiterbildung, bei der die Bildmuster das Gesicht des jeweiligen Benutzers umfassen, insbesondere nicht nur eine Fotographie des Benutzers, sondern sein tatsächliches aktuelles Erscheinungsbild. Die personenbezogene Bilderkennungseinrichtung muß dann in der Lage sein, Bildmuster der Gesichter von verschiedenen berechtigten Benutzern mit einem aktuell angebotenen Bildmuster zu vergleichen. Derartige Form- und Mustererkennungsprogramme sind an sich bereits bekannt.

Eine weitere Möglichkeit der Abfrage einer personenbezogenen Berechtigung besteht darin, daß die personenbezogene Information der Erkennungseinrichtung mittels Gewichtssignalen des jeweiligen Benutzers zugeführt wird, und daß die Gewichtssignale mit KFZ-seitig abgespeicherten Gewichtswerten berechtigter Benutzer verglichen werden. Dies läßt sich relativ leicht durch einen beispielsweise in den Fahrersitz eingebauten Gewichtssensor ermitteln, wobei die Gewichtsangabe natürlich innerhalb vernünftiger Grenzen auf die jeweilige Benutzerpersönlichkeit bezogen sein muß. Es ist eher unwahrscheinlich, daß ein potentieller Fahrzeugdieb, der sich in dem Besitz des ohnehin schon durch die benutzerspezifische Information individualisierten Datenträgers gebracht hat, auch noch die richtige "Gewichtsklasse" des berechtigten Benutzers aufweist.

Besonders bevorzugt ist eine Verfahrensvariante, bei der die KFZ-seitig gespeicherte, auf die Person des oder der zulässigen Benutzer bezogene Information mittels eines Mastercodes geändert werden kann. Auf diese Weise kann beispielsweise ein Autovermieter oder ein betrieblicher Fuhrpark die Datenträger an den jeweils sich ändernden Kreis von berechtigten Benutzern anpassen.

Besonders vorteilhaft ist auch eine Verfahrensvariante, bei der die KFZ-seitige Recheneinheit, vorzugsweise aufgrund eines vom jeweiligen Benutzer einzugebenden Zusatzbefehls, mindestens ein personenbezogenes elektronisches Fahrtenbuch führt. Das elektronische Fahrtenbuch kann auch grundsätzlich bei allen Benutzern und bei jeder Benutzung des Fahrzeugs automatisch und obligatorisch geführt werden, was sich beispielsweise wiederum für einen großen betrieblichen Fuhrpark oder Car-sharing-Varianten eignet, bei denen die Fahrzeuge von ständig wechselnden Fahrern bedient werden. Durch die benutzerspezifische Information auf dem Datenträger und die zusätzliche personenbezogene Information, die der Erkennungseinrichtung zugeführt wird, kann in jedem Fahrzeug potentiell für jeden möglichen Fahrer ein eigenes elektronisches Fahrtenbuch automatisch geführt werden.

Um das elektronische Fahrtenbuch auch für offizielle Zwecke tauglich zu machen, ist bei einer Weiterbildung dieser Ausführungsform vorgesehen, daß die Daten des elektronischen Fahrtenbuches KFZ-seitig derart schreibgesichert abgelegt werden, daß sie selbst bei Kenntnis eines Mastercodes nicht mehr nachträglich manipuliert werden können. Dadurch taugt das elektronische Fahrtenbuch auch beispielsweise bei polizeilichen Nachforschungen, Wirtschaftsprüfungen, steuerlichen Prüfungen und dergleichen als dokumentenechter Nachweis, möglicherweise sogar als gerichtliches Beweismittel.

Bei einer weiteren, ganz besonders bevorzugten Verfahrensvariante umfaßt die auf dem Datenträger gespeicherte benutzerspezifische Information behördliche Daten des Inhabers, insbesondere auf die Fahrerlaubnis des Inhabers bezogene Daten. Dadurch kann langfristig gesehen der Betrieb eines Kraftfahrzeuges unmittelbar an die Gültigkeit einer Fahrerlaubnis und über weitere, auf dem Datenträger gespeicherte fahrzeug-und/oder halterspezifische Daten auch an die Betriebserlaubnis des Fahrzeuges selbst gekoppelt werden. So können auch behördliche Fahrverbote, beispielsweise bei Smog-Alarm, wegen individueller Verfehlungen des entsprechenden Inhabers einer Fahrerlaubnis oder wegen Einschränkungen der Fahrerlaubnis (z.B. bei Nachtblindheit des Inhabers) direkt und ohne aufwendigen Einsatz von Polizeikontrollen durchgesetzt werden.

Bei weiteren Verfahrensvarianten umfaßt die auf dem Datenträger gespeicherte benutzerspezifische Information Daten von Versicherungsgesellschaften, insbesondere auf Haftpflichtversicherungen des Inhabers bezogene Daten. Dadurch kann beispielsweise verhindert werden, daß ein nicht ausreichend haftpflichtversichertes Fahrzeug überhaupt in Betrieb genommen wird, was die Allgemeinheit vor möglicherweise mangels Versicherung nicht durchsetzbarer Schadensersatzforderungen bei von nicht-versicherten Personen verursachten Unfällen bewahrt.

Weiterhin kann bei einer Variante des erfindungsgemäßen Verfahrens die auf dem Datenträger gespeicherte benutzerspezifische Information Daten von Kreditinstituten, insbesondere auf Kontostände oder Bonität des Inhabers bezogene Daten umfassen. Dadurch wird die Möglichkeit eröffnet, der Chipkarte, die erfindungsgemäß als "elektronischer Zündschlüssel" dient, beispielsweise auch Kreditkartenfunktionen aufzuprägen.

Aus Datenschutzgründen und zum Schutz des berechtigten Inhabers sollten die behördlichen Daten, Daten von Versicherungsgesellschaften, Daten von Kreditinstituten oder Daten anderer Institutionen nur von Berechtigten der jeweiligen Institution auf dem Datenträger des Inhabers eingetragen oder verändert werden können.

Besonders bevorzugt ist dabei eine Weiterbildung, bei der eine Veränderung der behördlichen Daten, Daten von Versicherungsgesellschaften und Daten von Kreditinstituten auf dem Datenträger des Inhabers automatisch mittels geeigneter Einrichtungen der jeweiligen Institution erfolgt. Dies kann entweder durch gesonderte Behandlung der Chipkarte in einem dafür vorgesehenen Gerät (beispielsweise "Aufladen" eines Guthabens bei Kreditkartenfunktion, Eintragen oder Löschen von fahrerlaubnisbezogenen Strafpunkten bei Nichtbeachtung von gesetzlichen Vorschriften und Verordnungen im Straßenverkehr oder Einbringen einer Versicherungszusage auf der Chipkarte) erfolgen, oder aber auch automatisch beispielsweise durch Zeitablauf, wenn auf der Chipkarte eine Uhrenfunktion integriert ist.

Besonders bevorzugt ist auch eine Variante des erfindungsgemäßen Verfahrens, bei der die KFZ-seitige Auswertung der vom Datenträger des Benutzers und/oder über die KFZ-seitige Erkennungseinrichtung zugeführte Information unter Einschaltung einer Datenbankabfrage, insbesondere mittels Funk, erfolgt. Auf diese Weise kann die Abfrage- und Auswertungsfunktion auf eine erheblich breitere Basis gestellt werden, weil die eigentliche Datenverarbeitung vom KFZ selbst ausgelagert wird, so daß im Fahrzeug keine nennenswert großen Rechner- und Speicherkapazität vorgehalten werden muß.

Bei einer weiteren besonders bevorzugten Verfahrensvariante ist vorgesehen, daß die benutzerspezifische Information zur Identifikation des Fahrers des freigegebenen KFZ zumindest teilweise, beispielsweise über Funk, an externe Einrichtungen, beispielsweise an Geschwindigkeitskontrollstellen der Polizei, an Grenzkontrollanlagen, an Zugangseinrichtungen zu Serviceanbietern wie Parkhäusern, Hotels oder Reparaturwerkstätten, an Kassenautomaten und dergleichen weitergegeben wird. Dies ermöglicht eine großflächige, massenweise und dennoch individuelle Merkmale berücksichtigende automatische Abwicklung von Dienstleistungen und Kontrollfunktionen im Zusammenhang mit dem Betrieb eines KFZ.

Der erhöhten Bequemlichkeit und Benutzerfreundlichkeit dient eine weitere Verfahrensvariante, bei der die benutzerspezifische Information zur individuellen Einstellung von Fahrzeugelementen wie Sitz, Lenkrad, Spiegel etc. gemäß personenspezifischer Voreinstellparameter des jeweiligen Benutzers verwendet wird. So kann jeder Benutzer individuell auf seinem Datenträger, beispielsweise unter Zuhilfenahme eines Mastercodes, die für ihn bequemsten Einstellungsparameter abspeichern, die dann bei der Benutzung des entsprechenden Fahrzeugs mittels elektrischer Sitz-, Lenkrad- und Spiegelverstellung jeweils automatisch vor Inbetriebnahme des Motors realisiert werden.

Vorteilhaft ist auch eine Variante des erfindungsgemäßen Verfahrens, bei der ein Alarm gegeben wird, wenn das Ergebnis des personenbezogenen Datenvergleichs in der Erkennungseinrichtung bzw. der Recheneinheit mehrmals hintereinander negativ ist. Dieses Merkmal ist an sich beispielsweise aus dem Bankkartenwesen bekannt, wo nach mehrmaliger erfolgloser Eingabe einer PIN die Karte von einem Kassenautomaten eingezogen wird.

In den Rahmen der vorliegenden Erfindung fällt auch ein Datenträger, insbesondere eine Chipkarte, zur Betriebsfreigabe eines Kraftfahrzeugs mit Speichermitteln, die benutzerspezifische Informationen zur Durchführung der oben beschriebenen erfindungsgemäßen Verfahrensschritte enthält.

Ebenso fällt in den Rahmen der Erfindung auch eine Fahrzeugeinrichtung, die mit Mitteln zur Durchführung der oben genannten erfindungsgemäßen Verfahrensschritte ausgerüstet ist.

Besonders bevorzugt ist eine Ausführungsform der erfindungsgemäßen Fahrzeugeinrichtung, bei der die Leseeinrichtung zur Detektion der benutzerspezifischen Information vom Datenträger des Benutzers die KFZ-seitige Erkennungseinrichtung zur Abfrage weiterer, personenbezogener Information umfaßt. Beispielsweise kann die Leseeinrichtung mit einer Tastatur zur alphanumerischen Eingabe einer PIN ausgestattet sein.

Von besonderem Vorteil ist auch eine Ausführungsform, bei der die KFZ-seitige Recheneinheit über eine Funkschnittstelle an eine externe Datenverarbeitungsanlage angeschlossen ist. Auf diese Weise kann die Rechen- und Speicherkapazität innerhalb des KFZ äußerst gering gehalten werden, ohne die durch die Anwendung des erfindungsgemäßen Verfahrens eröffneten (nahezu grenzenlosen) Möglichkeiten einzuschränken.

## Patentansprüche

1. Verfahren zur Betriebsfreigabe eines Kraftfahrzeuges (= KFZ), beispielsweise durch Freigabe des Zündsystems und/oder der Kraftstoffzufuhr und/oder Sperrung eines Alarmsystems des KFZ, wobei die Betriebsfreigabe aufgrund der Zuführung eines Datenträgers, insbesondere einer Chipkarte in eine KFZ-seitige Leseeinrichtung erfolgt, wenn die Leseeinrichtung erkennt, daß der zugeführte Datenträger gültig ist und zur Freigabe berechtigende Daten gespeichert hat,
dadurch gekennzeichnet,
daß der Datenträger benutzerspezifische Information des Inhabers des Datenträgers gespeichert hat, welche von der Leseeinrichtung detektiert, einer KFZ-seitigen Recheneinheit zugeführt und dort mit KFZ-seitig gespeicherter Information verglichen wird,
daß abhängig vom Ergebnis des Vergleichs vom Benutzer weitere, personenbezogene Informationen von einer KFZ-seitigen Erkennungseinrichtung abgefragt, der KFZ-seitigen Recheneinheit zugeführt und mit KFZ-seitig gespeicherter, auf die Person des oder der zulässigen Benutzer bezogener Informationen verglichen wird,
und daß abhängig vom Ergebnis des personenbezogenen Datenvergleichs die Betriebsfreigabe des KFZ erfolgt oder nicht.

2. Verfahren nach Anspruch 1, dadurch gekennzeichnet, daß die personenbezogene Information der Erkennungseinrichtung in Form eines alphanumerischen Codes, insbesondere einer in der Regel nur den berechtigten Benutzern bekannten Geheimnummer (personal identification number = "PIN") eingegeben wird.

3. Verfahren nach einem der vorhergehenden Ansprüche, dadurch gekennzeichnet, daß die personenbezogene Information der Erkennungseinrichtung in Form eines elektronischen Fingerabdrucks des Benutzers zugeführt wird.

4. Verfahren nach einem der vorhergehenden Ansprüche, dadurch gekennzeichnet, daß die personenbezogene Information der Erkennungseinrichtung mittels akustischer Signale zugeführt wird.

5. Verfahren nach Anspruch 4, dadurch gekennzeichnet, daß die akustischen Signale ein Codewort enthalten, welches von einer KFZ-seitigen Spracherkennungseinrichtung erkannt und mit einem abgespeicherten, zur Betriebsfreigabe berechtigenden Codewort verglichen wird.

6. Verfahren nach Anspruch 4 oder 5, dadurch gekennzeichnet, daß die akustischen Signale vom Benutzer abgegebene Stimmsignale umfassen und in einer KFZ-seitigen Sprechererkennungseinrichtung mit abgespeicherten, zur Betriebsfreigabe berechtigenden Frequenzmustern der Stimmen bestimmter Benutzer verglichen werden.

7. Verfahren nach einem der vorhergehenden Ansprüche, dadurch gekennzeichnet, daß die personenbezogene Information der Erkennungseinrichtung in Form von optischen Signalen zugeführt wird.

8. Verfahren nach Anspruch 7, dadurch gekennzeichnet, daß die optischen Signale Licht einer bestimmten Frequenz und/oder Impulsfolge umfassen und KFZ-seitig mit abgespeicherten, zur Betriebsfreigabe berechtigenden Frequenzen und/oder Impulsfolgen verglichen werden.

9. Verfahren nach Anspruch 7 oder 8, dadurch gekennzeichnet, daß die optischen Signale Bildmuster umfassen und in einer KFZ-seitigen Bilderkennungseinrichtung mit abgespeicherten, zur Betriebsfreigabe berechtigenden Bildmustern verglichen werden.

10. Verfahren nach Anspruch 9, dadurch gekennzeichnet, daß die Bildmuster das Gesicht des jeweiligen Benutzers umfassen.

11. Verfahren nach einem der vorhergehenden Ansprüche, dadurch gekennzeichnet, daß die personenbezogene Information der Erkennungseinrichtung mittels Gewichtssignalen des jeweiligen Benutzers zugeführt wird, und daß die Gewichtssignale mit KFZ-seitig abgespeicherten Gewichtswerten berechtigter Benutzer verglichen werden.

12. Verfahren nach einem der vorhergehenden Ansprüche, dadurch gekennzeichnet, daß die KFZ-seitig gespeicherte, auf die Person des oder der zulässigen Benutzer bezogene Information mittels eines Mastercodes geändert werden kann.

13. Verfahren nach einem der vorhergehenden Ansprüche, dadurch gekennzeichnet, daß die KFZ-seitige Recheneinheit, vorzugsweise aufgrund eines vom jeweiligen Benutzer einzugebenden Zusatzbefehls, mindestens ein personenbezogenes elektronisches Fahrtenbuch führt.

14. Verfahren nach Anspruch 13, dadurch gekennzeichnet, daß die Daten des elektronischen Fahrtenbuches KFZ-seitig derart schreibgesichert abgelegt werden, daß sie selbst bei Kenntnis eines Mastercodes nicht mehr nachträglich manipuliert werden können.

15. Verfahren nach einem der vorhergehenden Ansprüche, dadurch gekennzeichnet, daß die auf dem Datenträger gespeicherte benutzerspezifische Information behördliche Daten des Inhabers, insbesondere auf die Fahrerlaubnis des Inhabers bezogene Daten umfaßt.

16. Verfahren nach einem der vorhergehenden Ansprüche, dadurch gekennzeichnet, daß die auf dem Datenträger gespeicherte benutzerspezifische Information Daten von Versicherungsgesellschaften, insbesondere auf Haftpflichtversicherungen des Inhabers bezogene Daten umfaßt.

17. Verfahren nach einem der vorhergehenden Ansprüche, dadurch gekennzeichnet, daß die auf dem Datenträger gespeicherte benutzerspezifische Information Daten von Kreditinstituten, insbesondere auf Kontostände oder Bonität des Inhabers bezogene Daten umfaßt.

18. Verfahren nach einem der Ansprüche 15 bis 17, dadurch gekennzeichnet, daß die behördlichen Daten, Daten von Versicherungsgesellschaften und Daten von Kreditinstituten nur von Berechtigten der jeweiligen Institution auf dem Datenträger des Inhabers eingetragen oder verändert werden können.

19. Verfahren nach Anspruch 18, dadurch gekennzeichnet, daß eine Veränderung der behördlichen Daten, Daten von Versicherungsgesellschaften und Daten von Kreditinstituten auf dem Datenträger des Inhabers automatisch mittels geeigneter Einrichtungen der jeweiligen Institution erfolgt.

20. Verfahren nach einem der vorhergehenden Ansprüche, dadurch gekennzeichnet, daß die KFZ-seitige Auswertung der vom Datenträger des Benutzers und/oder über die KFZ-seitige Erkennungseinrichtung zugeführte Information unter Einschaltung einer Datenbankabfrage, insbesondere mittels Funk, erfolgt.

21. Verfahren nach einem der vorhergehenden Ansprüche, dadurch gekennzeichnet, daß die benutzerspezifische Information zur Identifikation des Fahrers des freigegebenen KFZ zumindest teilweise, beispielsweise über Funk, an externe Einrichtungen, beispielsweise an Geschwindigkeitskontrollstellen der Polizei, an Grenzkontrollanlagen, an Zugangseinrichtungen zu Parkhäusern, Hotels oder Reparaturwerkstätten, an Kassenautomaten und dergleichen weitergegeben wird.

22. Verfahren nach einem der vorhergehenden Ansprüche, dadurch gekennzeichnet, daß die benutzerspezifische Information zur individuellen Einstellung von Fahrzeugelementen wie Sitz, Lenkrad, Spiegel etc. gemäß personenspezifischer Voreinstellparameter des jeweiligen Benutzers verwendet wird.

23. Verfahren nach einem der vorhergehenden Ansprüche, dadurch gekennzeichnet, daß ein Alarm gegeben wird, wenn das Ergebnis des personenbezogenen Datenvergleichs in der Erkennungseinrichtung bzw. der Recheneinheit mehrmals hintereinander negativ ist.

24. Datenträger, insbesondere Chipkarte, zur Betriebsfreigabe eines Kraftfahrzeuges mit Speichermitteln, die benutzerspezifische Information zur Durchführung der Verfahrensschritte von einem oder mehreren Verfahren gemäß den Ansprüchen 1 bis 23 enthält.

25. Fahrzeugeinrichtung mit Mitteln zur Durchführung der Verfahrensschritte von einem oder mehreren Verfahren gemäß den Ansprüchen 1 bis 23.

26. Fahrzeugeinrichtung nach Anspruch 25, dadurch gekennzeichnet, daß die Leseeinrichtung zur Detektion der benutzerspezifischen Information vom Datenträger des Benutzers die KFZ-seitige Erkennungseinrichtung zur Abfrage weiterer, personenbezogener Information umfaßt.

27. Fahrzeugeinrichtung nach Anspruch 25 oder 26, dadurch gekennzeichnet, daß die KFZ-seitige Recheneinheit über eine Funkschnittstelle an eine externe Datenverarbeitungsanlage angeschlossen ist.
